# FASCICULE DE BREVET EUROPEEN

(11) **EP 1 571 383 B1**
(45) Date de publication et mention de la délivrance du brevet: **21.11.2007**
(21) Numéro de dépôt: 05356034.8
(22) Date de dépôt: 14.02.2005
(51) Int. Cl.: F16L 13/14, F16L 35/00, B21D 39/04, G01M 3/00

(54) **Raccord à sertir comprenant une bague de visualisation sécable**
Pressfitting mit einem schneidbaren Prüfring
Compression fitting comprising a cuttable check- ring

(30) Priorité: 02.03.2004 FR 0402144
(43) Date de publication de la demande: 07.09.2005
(73) Titulaire: COMAP, 69008 Lyon (FR)
(72) Inventeur: Tuffe, Stéphane, 73160 Cognin (FR); Le Clinche, Pascal, 69008 Lyon (FR)
(74) Mandataire: Maureau, Philippe

(56) Documents cités:
- EP-A- 1 081 421
- DE-U- 20 013 425
- US-A1- 2002 007 547

## Description

La présente invention concerne une bague de visualisation de sertissage sécable.

Lors de l'installation d'un réseau de tubes, l'installateur réalise un assemblage comprenant notamment des tubes et des raccords avec plusieurs phases, successivement d'emboîtement d'un tube et d'un raccord, puis de sertissage au cours de laquelle le raccord est serti sur l'extrémité du tube pour garantir la tenue mécanique durable de l'installation et son étanchéité.

Afin de garantir l'étanchéité durable de l'installation, il est nécessaire de sertir tous les raccords. Diverses solutions ont été envisagées pour permettre à l'utilisateur de vérifier que tous les raccords ont été sertis.

La création d'une fuite provoquée au niveau du raccord tant que celui-ci n'est pas serti a notamment été envisagée. Cette approche permet à l'opérateur de détecter les raccords non sertis en mettant l'installation sous pression puis en repérant les fuites, soit visuellement, soit en constatant une pression plus faible que la pression normale dans l'installation, ce qui permet une vérification globale du sertissage des raccords de l'installation. Ces fuites peuvent être provoquées par des joints de forme spécifique, n'assurant pas d'étanchéité avant sertissage, ce qui implique une fabrication coûteuse et peut impliquer un positionnement particulier du joint dans une gorge prévue à cet effet. Les fuites peuvent également être provoquées par la forme du raccord, permettant ainsi d'utiliser des joints communs toriques de section constante.

En particulier, les documents DE 101 18 995 et WO 01/63160 décrivent deux dispositifs permettant de réaliser de telles fuites provoquées avant sertissage.

Il a également été envisagé d'utiliser des moyens de marquage présents sur chaque raccord sous forme de bague, comme décrit dans les documents WO/O1/21997 ou DE 100 02 916. Toutefois, ces bagues se montrent difficiles à détruire lors du sertissage par les outils de sertissage.

Le but de la présente invention est de fournir une solution permettant une cassure certaine de la bague de visualisation lors du sertissage, en utilisant des mâchoires de sertissage connues, tout en garantissant que la bague est suffisamment solide pour ne pas être endommagée lors du transport ou du montage.

A cet effet, la présente invention porte sur un raccord à sertir comprenant au moins une ouverture d'introduction pour un tube, et une bague de visualisation sécable, destinée à être détruite lors du sertissage, montée sur le corps du raccord à proximité de l'ouverture de celui-ci, caractérisée en ce que la bague comporte au moins deux premières portions qui ne sont pas au contact du corps du raccord, au moins une des extrémités de chacune de ces premières portions étant reliée par une zone de jonction à une seconde portion adjacente de la bague, cette seconde portion étant en appui radial sur le corps du raccord, les zones de jonction étant réparties sur la périphérie de la bague de façon à délimiter entre elles des parties de bague de longueur inférieure à la moitié de la circonférence du corps du raccord.

Lors du sertissage, les mâchoires de sertissage prennent appui sur les premières portions et les poussent vers l'axe du raccord. D'autre part, les secondes portions sont en appui sur le corps du raccord. En conséquence, des contraintes importantes s'exercent au niveau des zones de jonction, ces zones étant détruites.

Avantageusement, au moins une zone de jonction est comprise dans un plan perpendiculaire à l'axe du raccord.

Selon une possibilité, au moins une zone de jonction est reliée à une première portion dans le prolongement de l'axe de cette portion.

Selon une autre possibilité, au moins une zone de jonction est reliée à une première portion de façon latérale par rapport à l'axe de cette portion.

Avantageusement, la bague est constituée d'un ensemble de parties identiques répétitives comprenant au moins :
- une seconde portion en appui latéral contre le corps du raccord,
- une première portion n'étant pas au contact du corps du raccord, et
- une zone de jonction.

Selon une possibilité, au moins une première portion comporte une partie en arc de cercle dont la tangente forme un angle avec la tangente à la surface du raccord en regard dont la valeur est comprise entre 20 et 90°.

Selon une autre possibilité, au moins une première portion comporte une partie en arc de cercle dont le centre est situé sur l'axe du raccord.

Selon une possibilité, au moins une zone de jonction comporte un segment s'étendant radialement.

Selon une autre possibilité, au moins une zone de jonction est constituée par une liaison directe entre une première et une seconde portion.

Selon une possibilité, au moins une seconde portion comporte une partie en arc de cercle de diamètre intérieur sensiblement égal au diamètre extérieur du raccord.

Selon une autre possibilité, au moins une seconde portion est formée par l'extrémité d'une partie en arc de cercle comprenant également une première portion.

Avantageusement, le corps du raccord comporte une butée extérieure située à proximité de l'ouverture, présentant un diamètre extérieur supérieur au diamètre intérieur de la bague.

Cette disposition permet d'éviter de perdre la bague lors des opérations de transport et de montage avant sertissage.

Selon une possibilité la butée est constituée par une déformation vers l'extérieur du corps du raccord, à proximité de l'ouverture, sur au moins une partie de la périphérie de l'ouverture.

Selon une seconde possibilité, la butée est constituée par un élément rapporté sur le corps du raccord à proximité de l'ouverture, notamment un anneau élastique monté en force sur le corps du raccord.

De toute façon, l'invention sera bien comprise à l'aide de la description qui suit, en référence au dessin schématique annexé, représentant à titre d'exemple non limitatif, plusieurs formes de réalisation d'un raccord selon l'invention.
La figure 1 en est une vue en perspective selon un premier mode de réalisation, une mâchoire de sertissage étant positionnée sur le raccord.
La figure 2 est une vue de face, à échelle agrandie, de la bague du raccord de figure 1.
La figure 3 est une vue en perspective d'une bague d'un raccord selon un second mode de réalisation.
La figure 4 est une vue en perspective d'une bague d'un raccord selon un troisième mode de réalisation.
La figure 5 est une vue en coupe selon V-V de figure 4.

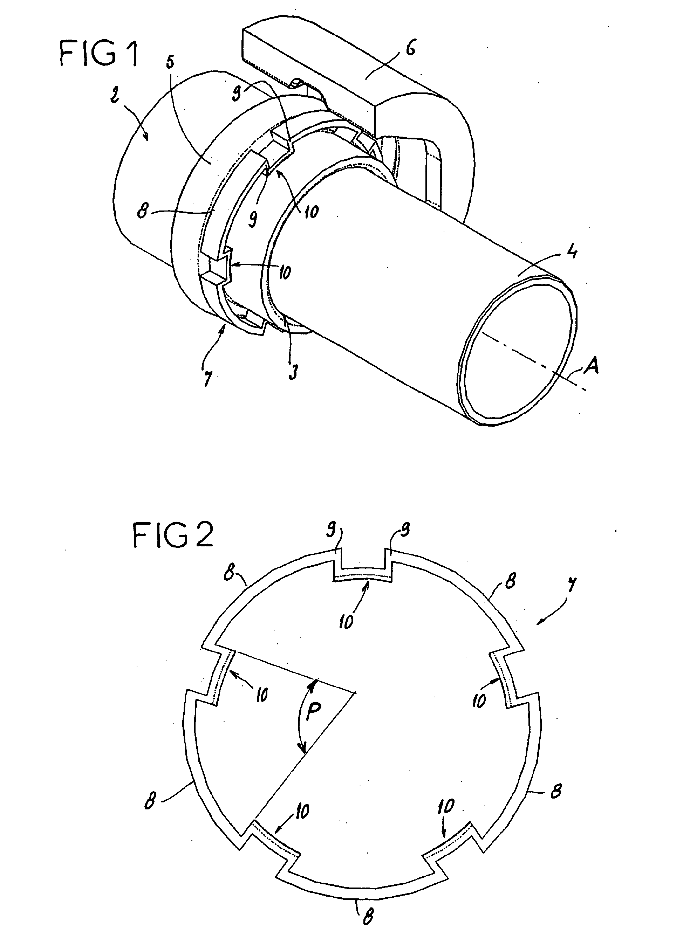

Un raccord 2 à sertir destiné au raccordement de tubes, selon l'invention est représenté sur la figure 1, pour sa partie comprenant une ouverture 3 pour un tube 4. Dans le mode de réalisation représenté, le raccord 2 comporte un corps tubulaire d'axe A présentant une ouverture circulaire 3 axiale et comprenant un bourrelet 5 extérieur radial à proximité de cette ouverture.

De façon connue, ce bourrelet 5 permet la formation d'une gorge sur la paroi intérieure du raccord, permettant le logement d'un joint d'étanchéité annulaire.

Ce raccord 2 est destiné à être serti sur le tube 4 introduit dans l'ouverture 3, le sertissage étant réalisé par une pince de sertissage comprenant deux mâchoires de sertissage 6, une de ces mâchoires étant représentée en position sur le raccord sur la figure 1.

Le raccord 2 comporte une bague 7 de visualisation sécable destinée à être détruite lors du sertissage, montée sur le corps du raccord à proximité de l'ouverture 3.

Cette bague 7 comporte des premières portions 8 n'étant pas au contact du corps du raccord 3 disposées régulièrement sur la périphérie du raccord 2, chacune de ces portions 8 formant un arc de cercle dont le centre est situé sur l'axe A du raccord 2.

Chaque extrémité d'une des premières portions 8 est reliée par une zone de jonction 9 à une seconde portion 10 adjacente de la bague, cette seconde portion étant en appui radial avec le corps du raccord 2.

En particulier, chaque seconde portion 10 est constituée par une partie en arc de cercle de diamètre intérieur sensiblement égal au diamètre extérieur du raccord 2.

Dans ce mode de réalisation, chaque zone de jonction 9 est constituée par un segment s'étendant radialement vers l'extérieur à partir d'une des extrémités de l'arc de cercle formant une seconde portion 10, l'extrémité de chaque segment la plus éloigné de l'axe A étant reliée à une première portion 8, sur la face du segment opposée à celle reliée à une seconde portion en arc de cercle 10.

La bague est ainsi constituée d'un ensemble de parties P identiques répétitives comprenant une première portion 8 n'étant pas au contact du corps du raccord 2, une première zone de jonction 9, une seconde portion 10 en appui radial contre le corps du raccord 2, et une seconde zone de jonction 9.

Dans ce mode de réalisation, les zones de jonction 9 au nombre de dix sont réparties sur la périphérie de la bague de façon à délimiter entre elles des parties de bague de longueur inférieure à la moitié de la circonférence du raccord.

Chaque zone de jonction 9 est comprise dans un plan perpendiculaire à l'axe A du raccord 2, et reliée à une première portion 8 dans le prolongement de l'axe de cette portion.

Lors du sertissage, les mâchoires de sertissage 6 prennent appui sur les premières portions 8 et les poussent vers l'axe du raccord. D'autre part, les secondes portions 10 sont en appui sur le corps du raccord 2. En conséquence, des contraintes importantes s'exercent au niveau des zones de jonction 9, ces zones étant détruites.

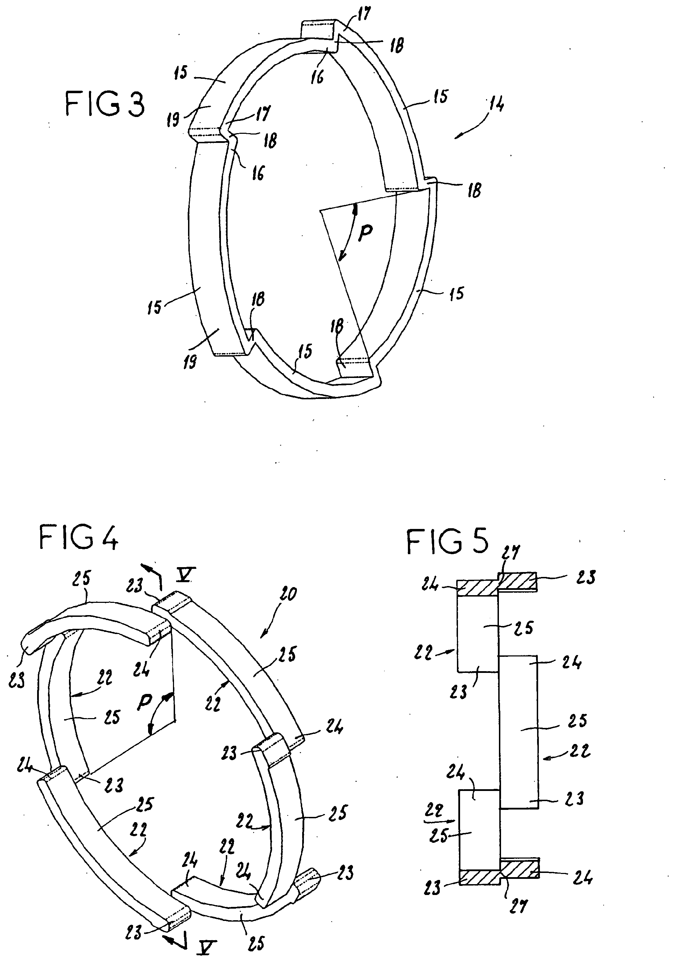

Selon un second mode de réalisation, le corps du raccord est identique au premier mode de réalisation. En revanche, la bague 14, représentée sur la figure 3, est de forme différente.

Cette bague 14 comporte une pluralité de parties 15 en forme d'arc de cercle dont la tangente forme un angle, avec la tangente à la surface du raccord 2 en regard, dont la valeur est de l'ordre de 20°.

Chaque partie en arc de cercle 15 comporte une première extrémité 16 qui est située au contact du corps du raccord 2, et une seconde extrémité 17 située à distance du corps du raccord 2.

Ainsi chaque partie en arc de cercle 15 permet de former une première portion 19 qui n'est pas au contact du corps du raccord 2, comprenant la seconde extrémité 17 et une seconde portion en appui radial, constituée par la première extrémité 16.

Une zone de jonction 18 entre chaque première portion 19 d'une partie en arc de cercle 15 et la seconde portion 16 de la partie en arc de cercle 15 adjacente est formée par un segment s'étendant radialement.

La bague est ainsi constituée d'un ensemble de parties P identiques répétitives comprenant une première portion 19 n'étant pas au contact du corps du raccord 2 une seconde portion 16 en appui radial contre le corps du raccord 2, et une zone de jonction 18.

Dans ce mode de réalisation, les zones de jonction 18 au nombre de cinq sont réparties sur la périphérie de la bague de façon à délimiter entre elles des parties de bague de longueur inférieure à la moitié de la circonférence du raccord.

Chaque zone de jonction 18 est comprise dans un plan perpendiculaire à l'axe A du raccord 2, et reliée à une première portion 19 dans le prolongement de l'axe de cette portion.

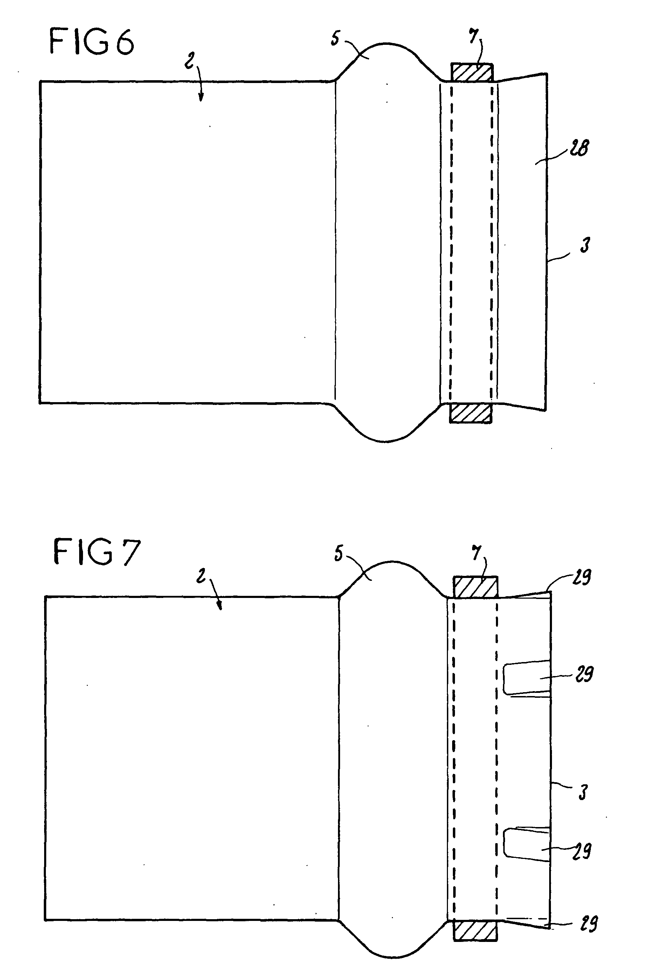

Selon un troisième mode de réalisation, le corps du raccord 2 est identique au premier mode de réalisation. En revanche, la bague 20, représentée sur les figures 4 et 5, est de forme différente.

Cette bague 20 comporte une pluralité de parties 22 en forme d'arc de cercle dont la tangente forme un angle, avec la tangente à la surface du raccord 2 en regard, dont la valeur est de l'ordre de 20°.

Chaque partie en arc de cercle 22 comporte une première extrémité 23 située à distance du corps du raccord 2, et une seconde extrémité 24 qui est située au contact du corps du raccord 2.

Ainsi chaque partie en arc de cercle 22 permet de former une première portion 25 qui n'est pas au contact du corps du raccord 2, comprenant la première extrémité 23 et une seconde portion en appui radial, constituée par la seconde extrémité 24.

Comme il est illustré sur la figure 4, les parties en arc de cercle 22 sont disposées en quinconce sur la périphérie du corps du raccord 2.

Chaque première portion 25 est reliée par une zone de jonction 27 située latéralement par rapport à l'axe de la première portion 25 et à proximité de la première extrémité 23 d'une partie en arc de cercle 22, à une seconde portion 24 faisant partie d'une autre partie en arc de cercle 22.

La bague est ainsi constituée d'un ensemble de parties P identiques répétitives comprenant deux parties en arc de cercle 22 successives.

Dans ce mode de réalisation, les zones de jonction 27 au nombre de six sont réparties sur la périphérie de la bague de façon à délimiter entre elles des parties de bague de longueur inférieure à la moitié de la circonférence du raccord.

Chaque zone de jonction 27 est comprise dans un plan perpendiculaire à l'axe A du raccord 2.

Dans ce mode de réalisation, la création de contraintes en cisaillement au moment du sertissage est favorisée au niveau des zones de jonction 27 de part la disposition en quinconce des parties en arc de cercle 22.

Dans les modes de réalisation décrits ci-dessus, la bague est réalisée dans une matière synthétique faiblement élastique.

Il est à signaler que dans les modes de réalisation présentés ci-dessus, l'épaisseur de matière au niveau des zones de jonction 9, 18, 27 peut être diminuée afin de favoriser la rupture à cet endroit.

Selon plusieurs variantes des modes de réalisation présentés ci-dessus, le corps du raccord 2 présente, à proximité de l'ouverture 3, une butée extérieure permettant d'empêcher la perte de la bague, cette butée présentant un diamètre extérieur supérieur au diamètre intérieur de la bague.

La présence de cette butée est avantageuse, car la bague faiblement élastique doit accommoder une tolérance importante de l'emboîture du raccord 2, c'est-à-dire de la zone du raccord 2 à proximité de l'ouverture 3. Il est donc possible qu'un jeu soit présent entre le corps du raccord et la bague.

Cette butée est constituée selon une première variante par une déformation du corps du raccord 2 en forme d'un évasement 28 continu sur la périphérie entière de l'ouverture 3, comme illustré sur la figure 6.

Selon une seconde variante, la butée est constituée de plusieurs bosselages 29 sur la périphérie de l'ouverture 3, comme illustré sur la figure 7.

Selon une autre variante non représentée, la butée peut être constituée par un élément rapporté sur le corps du raccord à proximité de l'extrémité, comme un anneau élastique entré en force sur le corps du raccord.

Comme il va se soi, l'invention ne se limite pas aux formes de réalisation préférentielle décrite ci-dessus, à titre d'exemple non limitatif ; elle en embrasse au contraire toutes les variantes de réalisation dans le cadre des revendications ci-après.

## Revendications

1. Raccord (2) à sertir comprenant au moins une ouverture (3) d'introduction pour un tube (4), et une bague (7, 14, 20) de visualisation sécable, destinée à être détruite lors du sertissage, montée sur le corps du raccord (2) à proximité de l'ouverture (3) de celui-ci, **caractérisée en ce que** la bague(7, 14, 20) comporte au moins deux premières portions (8, 19, 25) qui ne sont pas au contact du corps du raccord (2), au moins une des extrémités de chacune de ces premières portions (8, 19, 25) étant reliée par une zone de jonction (9, 18, 27) à une seconde portion (10, 16, 24) adjacente de la bague (7, 14, 20), cette seconde portion (10, 16, 24) étant en appui radial sur le corps du raccord (2), les zones de jonction (9, 18, 27) étant réparties sur la périphérie de la bague (7, 14, 20) de façon à délimiter entre elles des parties de bague de longueur inférieure à la moitié de la circonférence du corps du raccord (2).

2. Raccord (2) selon la revendication 1, **caractérisée en ce qu**'au moins une zone de jonction (9, 18, 27) est comprise dans un plan perpendiculaire à l'axe (A) du raccord (2).

3. Raccord (2) selon la revendication 2, **caractérisé en ce qu**'au moins une zone de jonction (9, 18) est reliée à une première portion (8, 19) dans le prolongement de l'axe de cette portion.

4. Raccord (2) selon la revendication 3, **caractérisé en ce qu**'au moins une zone de jonction (27) est reliée à une première portion (25) de façon latérale par rapport à l'axe de cette portion.

5. Raccord (2) selon l'une des revendications 1 à 4, **caractérisée en ce que** la bague (7, 14, 20) est constituée d'un ensemble de parties (P) identiques répétitives comprenant au moins :
- une seconde portion (10, 16, 24) en appui latéral contre le corps du raccord (2),
- une première portion (8, 19, 25) n'étant pas au contact du corps du raccord (2), et
- une zone de jonction (9, 18, 27).

6. Raccord (2) selon l'une des revendications 1 à 5, **caractérisée en ce qu**'au moins une première portion (19, 25) comporte une partie en arc de cercle dont la tangente forme un angle avec la tangente à la surface du raccord (2) en regard dont la valeur est comprise entre 20 et 90°.

7. Raccord (2) selon l'une des revendications 1 à 5, **caractérisée en ce qu'**au moins une première portion (8) comporte une partie en arc de cercle dont le centre est situé sur l'axe (A) du raccord (2).

8. Raccord (2) selon l'une des revendications 1 à 7, **caractérisée en ce qu**'au moins une zone de jonction (9, 18) comporte un segment s'étendant radialement.

9. Raccord (2) selon l'une des revendications 1 à 7, **caractérisé en ce qu**'au moins une zone de jonction (27) est constituée par une liaison directe entre une première (25) et une seconde portion (24).

10. Raccord (2) selon l'une des revendications 1 à 9, **caractérisée en ce qu**'au moins une seconde portion (10) comporte une partie en arc de cercle de diamètre intérieur sensiblement égal au diamètre extérieur du raccord (2).

11. Raccord (2) selon l'une des revendications 1 à 9, **caractérisée en ce qu**'au moins une seconde portion (17, 24) est formée par l'extrémité d'une partie en arc de cercle (15, 22) comprenant également une première portion (19, 25).

12. Raccord (2) selon l'une des revendications 1 à 11, **caractérisé en ce que** le corps du raccord (2) comporte une butée (28, 29) extérieure située à proximité de l'ouverture (3), présentant un diamètre extérieur supérieur au diamètre intérieur de la bague (7, 14, 20).

13. Raccord (2) selon la revendication 12, **caractérisé en ce que** la butée est constituée par une déformation (28, 29) vers l'extérieur du corps du raccord (2), à proximité de l'ouverture (3), sur au moins une partie de la périphérie de l'ouverture (3).

14. Raccord (2) selon la revendication 13, **caractérisé en ce que** la butée est constituée par un élément rapporté sur le corps du raccord (2) à proximité de l'ouverture (3), notamment un anneau élastique monté en force sur le corps du raccord (2).

## Claims

1. Crimp fitting (2) comprising at least one opening (3) for introducing a pipe (4) and a cleavable visualization ring (7, 14 or 20), intended for being destroyed during crimping, fitted to the body of the fitting (2) close to its opening (3), **characterized in that** the ring (7, 14 or 20) comprises at least two first portions (8, 19 or 25) which are not in contact with the fitting body (2), at least one of the ends of each of these first portions (8, 19 or 25) being connected by a junction area (9, 18 or 27) to a second, adjacent portion (10, 16 or 24) of the ring (7, 14 or 20), this second portion (10, 16 or 24) being radially supported on the fitting body (2), the junction areas (9, 18 or 27) being distributed along the periphery of the ring (7, 14 or 20) so as to define, between them, ring parts shorter than half the circumference of the fitting body (2).

2. Fitting (2) according to Claim 1, **characterized in that** at least one junction area (9, 18 or 27) is included in a plane perpendicular to the centre-line (A) of the fitting (2).

3. Fitting (2) according to Claim 2, **characterized in that** at least one junction area (9 or 18) is connected to a first portion (8 or 19) in the extension of this portion's centre-line.

4. Fitting (2) according to Claim 3, **characterized in that** at least one junction area (27) is connected to a first portion (25) laterally in relation to this portion's centre-line.

5. Fitting (2) according to any one of Claims 1 to 4, **characterized in that** the ring (7, 14 or 20) is formed by a set of identical, repetitive parts (P) comprising at least:
- a second portion (10, 16 or 24) supported laterally against the fitting body (2),
- a first portion (8, 19 or 25) not being in contact with the fitting body (2) and
- a junction area (9, 18 or 27).

6. Fitting (2) according to any one of Claims 1 to 5, **characterized in that** at least one first portion (19 or 25) comprises a part in the form of an arc of a circle, the tangent of which forms an angle with the tangent to the surface of the fitting (2) opposite, the value of which is between 20° and 90°.

7. Fitting (2) according to any one of Claims 1 to 5, **characterized in that** at least one first portion (8) comprises a part in the form of an arc of a circle, the centre of which is situated on the centre-line (A) of the fitting (2).

8. Fitting (2) according to any one of Claims 1 to 7, **characterized in that** at least one junction area (9 or 18) comprises a segment running radially.

9. Fitting (2) according to any one of Claims 1 to 7, **characterized in that** at least one junction area (27) is formed by a direct connection between a first portion (25) and a second portion (24).

10. Fitting (2) according to any one of Claims 1 to 9, **characterized in that** at least one second portion (10) comprises a part in the form of an arc of a circle having an inside diameter substantially equal to the outside diameter of the fitting (2).

11. Fitting (2) according to any one of Claims 1 to 9, **characterized in that** at least one second portion (17 or 24) is formed by the end of a part in the form of an arc of a circle (15 or 22) also comprising one first portion (19 or 25).

12. Fitting (2) according to any one of Claims 1 to 11, **characterized in that** the fitting body (2) comprises an external stop (28 or 29) situated close to the opening (3), having an outside diameter greater than the inside diameter of the ring (7, 14 or 20).

13. Fitting (2) according to Claim 12, **characterized in that** the stop is formed by a deformation (28 or 29) towards the outside of the fitting body (2), close to the opening (3), on at least one part of the periphery of the opening (3).

14. Fitting (2) according to Claim 13, **characterized in that** the stop is formed by an element mounted on the fitting body (2), close to the opening (3), in particular an elastic ring press-fitted on to the fitting body (2).

## Patentansprüche

1. Anschlussstück (2) zum Aufpressen, das mindestens eine Öffnung (3) zum Einführen eines Rohres (4) hat, sowie ein zerbrechbarer Ring (7, 14, 20) zur visuellen Anzeige, der dazu bestimmt ist, beim Aufpressen zerstört zu werden, und der auf dem Körper des Anschlussstücks (2) nahe bei dessen Öffnung (3) montiert ist, **dadurch gekennzeichnet, dass** der Ring (7, 14, 20) mindestens zwei erste Teilbereiche (8, 19, 25) umfasst, die mit dem Körper des Anschlussstücks (2) keinen Kontakt haben, wobei mindestens eines der Enden jedes ersten Teilbereichs (8, 19, 25) durch eine Verbindungszone (9, 18, 27) mit einem benachbarten zweiten Teilbereich (10, 16, 24) des Rings (7, 14, 20) verbunden ist, wobei dieser zweite Teilbereich (10, 16, 24) radial auf dem Körper des Anschlussstücks (2) aufliegt, und wobei die Verbindungszonen (9, 18, 27) auf der Peripherie des Rings (7, 14, 20) so verteilt sind, dass sie zwischen sich Ringteile abgrenzen, deren Länge kürzer ist als die Hälfte des Umfangs des Körpers des Anschlussstücks (2).

2. Anschlussstück (2) nach Anspruch 1, **dadurch gekennzeichnet, dass** mindestens eine Verbindungszone (9, 18, 27) in einer zur Achse (A) des Anschlussstücks (2) senkrechten Ebene liegt.

3. Anschlussstück (2) nach Anspruch 2, **dadurch gekennzeichnet, dass** mindestens eine Verbindungszone (9, 18) mit einem ersten Teilbereich (8, 19) in der Verlängerung der Achse dieses Teilbereichs verbunden ist.

4. Anschlussstück (2) nach Anspruch 3, **dadurch gekennzeichnet, dass** mindestens eine Verbindungszone (27) mit einem ersten Teilbereich (25), bezogen auf die Achse dieses Teilbereichs, seitlich verbunden ist.

5. Anschlussstück (2) nach einem der Ansprüche 1 bis 4, **dadurch gekennzeichnet, dass** der Ring (7, 14, 20) aus einem Ensemble von identischen, sich wiederholenden Ringteilen (P) besteht, das mindestens umfasst:
- einen zweiten Teilbereich (10, 16, 24), der seitlich auf dem Körper des Anschlussstücks (2) aufliegt,
- einen ersten Teilbereich (8, 19, 25), der mit dem Körper des Anschlussstücks (2) keinen Kontakt hat, und
- eine Verbindungszone (9, 18, 27).

6. Anschlussstück (2) nach einem der Ansprüche 1 bis 5, **dadurch gekennzeichnet, dass** mindestens ein erster Teilbereich (19, 25) einen kreisbogenförmigen Bereich umfasst, dessen Tangente einen Winkel mit der Tangente an die gegenüber liegende Oberfläche des Anschlussstücks bildet, dessen Wert zwischen 20° und 90° liegt.

7. Anschlussstück (2) nach einem der Ansprüche 1 bis 5, **dadurch gekennzeichnet, dass** mindestens ein erster Teilbereich (8) einen kreisbogenförmigen Bereich umfasst, dessen Mittelpunkt auf der Achse (A) des Anschlussstücks (2) liegt.

8. Anschlussstück (2) nach einem der Ansprüche 1 bis 7, **dadurch gekennzeichnet, dass** mindestens eine Verbindungszone (9, 18) ein Segment hat, das radial verläuft.

9. Anschlussstück (2) nach einem der Ansprüche 1 bis 7, **dadurch gekennzeichnet, dass** mindestens eine Verbindungszone (27) durch eine direkte Verbindung zwischen einem ersten (25) und einem zweiten Teilbereich (24) gebildet ist.

10. Anschlussstück (2) nach einem der Ansprüche 1 bis 9, **dadurch gekennzeichnet, dass** mindestens ein zweiter Teilbereich (10) einen kreisbogenförmigen Bereich mit einem Innendurchmesser hat, der im wesentlichen gleich dem Außendurchmesser des Anschlussstücks (2) ist.

11. Anschlussstück (2) nach einem der Ansprüche 1 bis 9, **dadurch gekennzeichnet, dass** mindestens ein zweiter Teilbereich (17, 24) durch das Ende eines kreisbogenförmigen Bereichs (15, 22) gebildet ist, der ebenfalls einen ersten Teilbereich (19, 25) umfasst.

12. Anschlussstück (2) nach einem der Ansprüche 1 bis 11, **dadurch gekennzeichnet, dass** der Körper des Anschlussstücks (2) einen außen liegenden Anschlag (28, 29) hat, der in der Nähe der Öffnung (3) liegt und einen Außendurchmesser aufweist, der größer ist als der Innendurchmesser des Rings (7, 14, 20).

13. Anschlussstück (2) nach Anspruch 12, **dadurch gekennzeichnet, dass** der Anschlag durch eine nach außen zeigende Verformung (28, 29) des Körpers des Anschlussstücks (2) in der Nähe der Öffnung (3) gebildet ist, und zwar auf mindestens einem Teilabschnitt der Peripherie der Öffnung (3).

14. Anschlussstück (2) nach Anspruch 13, **dadurch gekennzeichnet, dass** der Anschlag von einem Element gebildet ist, das auf dem Körper des Anschlussstücks (2) in der Nähe der Öffnung (3) angebracht ist, insbesondere von einem elastischen Ring, der auf den Körper des Anschlussstücks (2) festsitzend aufgezogen ist.
